# EUROPÄISCHE PATENTSCHRIFT

(11) **EP 0 567 492 B1**
(45) Veröffentlichungstag und Bekanntmachung des Hinweises auf die Patenterteilung: **21.09.1994**
(21) Anmeldenummer: 92902319.0
(22) Anmeldetag: 14.01.1992
(51) Int. Cl.: G06F 11/00

(54) **VERFAHREN UND ANORDNUNG ZUR ÜBERWACHUNG VON RECHNERMANIPULATIONEN**
METHOD AND DEVICE FOR MONITORING COMPUTER MANIPULATIONS
PROCEDE ET SYSTEME POUR LA SURVEILLANCE DE MANIPULATIONS SUR DES ORDINATEURS

(30) Priorität: 16.01.1991 DE 4101141
(43) Veröffentlichungstag der Anmeldung: 03.11.1993
(73) Patentinhaber: Siemens Nixdorf Informationssysteme Aktiengesellschaft, 33102 Paderborn (DE)
(72) Erfinder: GLASCHICK, Rainer, D-4790 Paderborn (DE)
(74) Vertreter: Fuchs, Franz-Josef, Dr.-Ing.
(86) Internationale Anmeldenummer: EP9200061
(87) Internationale Veröffentlichungsnummer: WO9213307

(56) Entgegenhaltungen:
- EP-A- 0 304 033
- WO-A-90/05418
- COMPUTERS & SECURITY. Band 9, Nr. 2, April 1990, AMSTERDAM NL, Seiten 131-137; GHANNAM M. AL-DOSSARY: "Computer virus prevention and containment on mainfraimes"
- COMPUTERS & SECURITY. Band 7, Nr. 2, April 1988, AMSTERDAM NL, Seiten 157 - 163; H.J.HIGHLAND:"How to combat a computer virus"

## Beschreibung

Die vorliegende Erfindung betrifft ein Verfahren und eine Anordnung zur Überwachung von Manipulationen an Rechnern, die über ein Netzwerk verbunden sind, gemäß dem Oberbegriff der Ansprüche 1 bzw. 10.

Mit Manipulationen an Rechnern sind insbesondere Veränderungen an ausführbaren Programmen durch nicht-autorisierte Personen gemeint, also z.B. das "Infizieren" von Rechnern mit "Viren" oder "Trojanischen Pferden".

Zur Überprüfung, ob Manipulationen an einem Rechner stattgefunden haben, sind folgende Möglichkeiten bekannt:
- Regelmäßige manuelle Inspektion der Datenbestände. Dieser Aufwand ist nur für besonders gefährdete oder sicherheitsrelevante Fälle gerechtfertigt.
- Die Verwendung von klassifizierten Betriebssystemen. Klassifizierte Betriebssysteme sind solche, die nach Evaluationsrichtlinien wie den amerikanischen "Trusted Computer System Evaluation Criteria", den deutschen "IT-Sicherheitskriterien" oder ähnlichen Regelsammlungen entsprechen. Klassifizierte Betriebssysteme haben ab bestimmten Klassen eingebaute Sicherheitsstufen, die Manipulationen erschweren. Beispielsweise sind ab der Klasse B2 der obengenannten "Trusted Computer System Evaluation Criteria" sogenannte "Access Control Lists" vorgeschrieben, die eine feinere Abstufung der Schreibprivilegien erlauben. Vorgeschriebene Protokolldateien erleichtern die Erkennung von Manipulationen, verhindern sie aber nicht. Gelingt es einem Eindringling jedoch, sich die entsprechenden Privilegien zu verschaffen, so kann er wie in herkömmlichen Systemen Dateien manipulieren.
- Versiegelung der Dateien und Dateiverzeichnisse durch Sig-naturen und Überprüfung bei Zugriff. Eine solche Versiegelung ist z.B. aus der DE-OS 37 36 760 oder der EP-0 137 075 bekannt. Um eine hinreichende Sicherheit zu erzielen, darf die Überprüfung der Versiegelung nicht auf der Anwenderebene erfolgen, sondern muß von einem speziell hierfür modifizierten Betriebssystem durchgeführt werden. Dabei wird vorausgesetzt, daß das Betriebssystem vom Eindringling nicht manipuliert wird. Dieses Verfahren bleibt problematisch, wenn die Versiegelung auf dem Rechner selbst erzeugt werden kann, weil dann ein Eindringling selbst neue Siegel für die manipulierten Dateien erzeugen kann. In dem IBM-Betriebssystem MVS ist z.B. ein Schutz gegen Manipulation möglich, indem gekennzeichnete Dateien nur nach Zustimmung durch den Systemverwalter geändert werden können. Diese Möglichkeit erfordert jedoch einen hohen systemadministrativen Aufwand, damit die Zustimmung des Systemverwalters auch immer zum geeigneten Zeitpunkt möglich ist.
- Automation der regelmäßigen Inspektion gemäß dem Oberbegriff des Anspruchs 1, wobei auf dem zu überwachenden Rechner in einer geschützten Datei Prüfsummen oder sonstige Attribute über die zu schützenden Dateien gespeichert werden und in regelmäßigen Abständen durch ein Programm verifiziert werden. Dieses Verfahren ist insofern wünschenswert, als es keinen Personalaufwand bedeutet und ohne Eingriff in das Betriebssystem auskommt. Es hat jedoch den Nachteil, daß es keinen geeigneten Schutz gegen Eindringlinge bietet. Hat sich ein Eindringling erst einmal Zugang zum Rechner verschafft, so wird er sich bevorzugt darüber informieren, welche Sicherheitsmechanismen vorhanden sind. Eine der ersten Manipulationen bestände dann darin, diese Schutzmechanismen auszuschalten, da die automatische Inspektion praktisch nicht zu verbergen ist. Dies ist für den Eindringling in der Regel praktikabel, weil das Programm, das die zu schützenden Dateien verifizieren soll, auf dem Rechner selbst vorhanden und somit Manipulationen ausgesetzt ist.

Es ist die Aufgabe der Erfindung, ein Verfahren und eine Anordnung zu schaffen, mit denen die Möglichkeit einer unbemerkten Manipulation an über ein Netzwerk verbundenen Rechnern verringert werden kann und die mit einem Standard-Betriebssystem betrieben werden.

Diese Aufgabe wird erfindungsgemäß durch ein Verfahren mit den Merkmalen des Anspruchs 1 und eine Anordnung mit den Merkmalen des Anspruchs 10 gelöst. Vorteilhafte Weiterbildungen sind Gegenstand der Unteransprüche.

Die Erfindung geht davon aus, daß sich durch die Manipulation von Datenbeständen (z.B. Dateien und/oder Dateiverzeichnissen) auch deren Attribute ändern. Der besondere Vorteil liegt in dem Prinzip, daß eine für Eindringlinge nicht zugängliche Überwachungseinrichtung (z.B. ein Rechner, der in einem abgeschlossenen Raum aufgestellt ist, zu dem nur eine sehr begrenzte Anzahl von Personen Zugang hat) mit den anderen Rechnern ventilartig verbunden ist. Ventilartig heißt in diesem Zusammenhang, daß die Überwachungseinrichtung zwar auf die an dem Netzwerk angeschlossenen Rechner zugreifen kann, ein Eindringling, der in einen dieser Rechner eingedrungen ist, jedoch nicht auf die Überwachungseinrichtung zugreifen kann. Somit liegt eine Art übergeordnete Überwachungsinstanz vor. Ein Programm zur Überprüfung von Dateibeständen liegt also nicht auf dem zu überprüfenden Rechner selbst vor, sondern in der geschützten Überwachungseinrichtung, die vorzugsweise ein Überwachungsrechner ist. Durch diese Aufteilung wird der für Eindringlinge notwendige Aufwand, den Schutz abzuschalten, ohne daß ein Alarm ausgelöst wird, erheblich erhöht.

Das erfindungsgemäße Verfahren wird vorzugsweise auf Dateien angewandt, die einer zentralen Administration, z.B. durch einen Systemverwalter, unterliegen. Insbesondere Teile des Betriebssystems und die das System steuernden Dateien fallen hierunter. Dieser Schutz ist besonders wichtig, da ihre Manipulation das gesamte System gefährden kann.

Das Abfragen der Datenbestandsattribute durch die Überwachungseinrichtung kann automatisch und in regelmäßigen Zeitabständen durchgeführt werden. Bei einer anderen bevorzugten Ausführungsform kann das Abfragen bewußt in unregelmäßigen Zeitabständen durchgeführt werden, so daß ein Eindringling die zwischen regelmäßigen Überprüfungen vorliegenden Zeiten nicht zur Manipulation ausnutzen kann.

Bevorzugt fragt die Überwachungseinrichtung die Datenbestandsattribute mehrerer Rechner zeitverschachtelt ab und vergleicht sie mit Sollwerten. Dies ist insbesondere dann von Nutzen, wenn die Überwachung synchron abläuft, die Überwachungseinrichtung also nach der Abgabe einer Abfrage wartet, bis der Rechner das Dateiattribut zurückmeldet. Aus Gründen der Betriebssicherheit muß die Überwachungseinrichtung einen Zeitgeber enthalten, um ausbleibende Quittungen zu erkennen und als fehlgeschlagene Abfrage zu werten. Da das Zurückmelden von Abfragen durch die Rechner eine gewisse Zeit benötigt, ist es sinnvoll, die Abfragen durch die Überwachungseinrichtung zeitverschachtelt abzugeben.

Gemäß einem besonders bevorzugten Ausführungsbeispiel wird die Abfrage der Dateibestandsattribute durch eine sogenannte "Client-Server-Architektur" realisiert. Die Überwachungseinrichtung ist ein Überwachungsrechner, auf dem ein Prüferprogramm (client) und mindestens eine Datei vorhanden ist, in der die zu überprüfenden Dateibestände und die jeweiligen Sollwerte ihrer Attribute gespeichert sind. Auf den zu überprüfenden Rechnern ist jeweils mindestens ein Dienstprogramm (server) implementiert, das auf Auftrag die Attribute der Dateibestände auf diesem Rechner berechnen und über das Netzwerk zurückmelden kann.

Auf den Rechnern sind zur Kommunikation zwischen den Rechnern üblicherweise auch Dienstprogramme implementiert, die einen "Einstieg" in den Rechner über das Netzwerk ermöglichen. Zumindest ein solches Dienstprogramm darf auf dem Überwachungsrechner nicht implementiert sein, um den ventilartigen Anschluß des Überwachungsrechners an das Netzwerk zu gewährleisten.

Die bislang beschriebene Anordnung erhöht die Sicherheit erheblich, ohne daß das auf den zu überprüfenden Rechnern installierte Betriebssystem modifiziert werden müßte.

Ein Eindringling kann jedoch die Kommunikation zwischen Überwachungsrechner und zu überprüfenden Rechnern aufzeichnen und somit die Datei auf dem Überwachungsrechner rekonstruieren, die u.a. die Sollwerte der Attribute speichert. Es besteht also die Möglichkeit, daß ein Eindringling das Dienstprogramm auf dem zu überprüfenden Rechner durch ein Dienstprogramm ersetzt, welches die Attribute der Dateibestände auf dem Rechner gar nicht berechnet, sondern einfach der rekonstruierten Datei entnimmt. Dieses Ziel kann allerdings nicht einfach erreicht werden, da angenommen werden muß, daß ein Eindringling alle Dateien und Programme durch eigene ersetzen kann und ggfs. auch den Rechner auf dem Netzwerk nachbilden kann.

Um jedoch auch eine solche Manipulation zu verhindern, kann die Sicherheit des erfindungsgemäßen Verfahrens durch bevorzugte Ausführungsformen weiter erhöht werden.

Eine erste bevorzugte Möglichkeit der weiteren Absicherung besteht darin, die Kommunikation über das Netzwerk zu verschlüsseln. Da jedoch im Normalfall immer dieselben Meldungen übertragen werden (z.B. da sich die Dateiattribute von Betriebssystemdateien in der Regel nicht verändern), wird bevorzugt eine Verschlüsselung mit wechselnden Schlüsseln angewandt. Diese wechselnden Schlüssel könnten z.B. nach dem bekannten Verfahren von Diffie und Hellmann erzeugt werden (W. Diffie und M.E. Hellmann, New Directions in Cryptography, I.E.E. Trans. Inf. Series, Nr. 6, November 1976, S. 140). Dieses bekannte Verfahren ermöglicht die Erzeugung eines gemeinsamen Schlüssels zweier Teilnehmer durch einen öffentlichen Dialog, ohne daß ein Zuhörer den Schlüssel rekonstruieren kann.

Eine andere bevorzugte Möglichkeit zur weiteren Erhöhung der Sicherheit besteht darin, zur Eröffnung der Kommunikation zwischen Prüferprogramm und Dienstprogramm ein sicheres Authentisierungsprotokoll ablaufen zu lassen. Ein solches Authentisierungsprotokoll ist z.B. aus der DE-OS 38 17 484 bekannt. Dabei ist im Dienstprogramm ein geheimer Schlüssel durch ein einfaches Verfahren, z.B. durch Verknüpfung mit XOR mit einem festen, gleichfalls gespeicherten Wert chiffriert.

Eine dritte Möglichkeit zur Erhöhung der Sicherheit besteht darin, das Dienstprogramm zur Berechnung und Abgabe der Dateiattribute in ein weiteres, bereits vorhandenes Dienstprogramm zu integrieren, wodurch der Aufwand eines Eindringlings erheblich steigt, da er nun ein Dienstprogramm durch eines ersetzen muß, das für die ursprünglich auszuführenden Dienste unverändert funktionieren muß. Falls dies nicht geschieht, würde das Fehlverhalten auffallen. Vorzugsweise kann der Programmtext dieses erweiterten Dienstprogramms vor einer Kommunikation mit dem Überwachungsrechner an diesen übermittelt werden, wo der tatsächliche Programmtext mit einem Sollwert verglichen wird.

Eine vierte Möglichkeit zur Erhöhung der Sicherheit besteht darin, daß man auf den Rechnern keine vollständigen Dienstprogramme zur Berechnung der Dateiattribute, sondern lediglich Ladeprogramme implementiert. Das eigentliche Dienstprogramm liegt lediglich auf dem Überwachungsrechner vor, der dieses vor Beginn einer Überprüfung eines Rechners an dessen Ladeprogramm sendet. Somit kann ein Eindringling das Dienstprogramm nicht modifizieren, da es auf dem Rechner gar nicht vorhanden ist. Um zu verhindern, daß ein Eindringling ein Täusch-Ladeprogramm implementiert, das das übermittelte Dienstprogramm einfach ignoriert, wird das Dienstprogramm im Überwachungsrechner vorzugsweise mit einer gewöhnlichen oder einer kryptographischen Prüfsumme versehen, die von dem Ladeprogramm zurückgegeben werden muß. Hierzu kann vor dem Absenden des Dienstprogramms eine Zufallszahl in dieses eingetragen werden, so daß jedes Mal eine neue Prüfsumme übermittelt werden muß. Alternativ kann auf die Prüfsumme verzichtet und stattdessen im Dienstprogramm ein wechselnder Schlüssel für eine symmetrische Verschlüsselung der Dialoge versteckt gespeichert werden.

Wird bei einer Prüfung der Dateibestandattribute oder der Authentizität des zu überprüfenden Rechners eine Abweichung festgestellt, so sind verschiedene Möglichkeiten der Auswertung gegeben. Beispielsweise kann ein Eintrag in eine entsprechende Datei erfolgen. Es kann auch eine Nachricht an einen Systemverwalter geschickt werden. Alternativ kann eine Alarmglocke ausgelöst werden. Ein weiteres Dienstprogramm in dem zu überprüfenden Rechner kann angesprochen werden, das diesen Rechner deaktiviert. Wenn als Netzwerk ein Bus-Netzwerk wie Ethernet eingesetzt wird, kann der Rechner auch vom Überwachungsrechner aus vom Netzwerk isoliert werden. Hierzu kann eine Hardware-Einrichtung ständig die Datenpakete auf dem Netz überwachen. Sendet der Rechner ein Paket (oder soll er eines empfangen), so kann dieses durch die Hardware-Anordnung erkannt werden, da die Pakete die Adresse des Rechners in einer bestimmten Position tragen. Die Hardware-Einrichtung kann dann veranlassen, daß sich der Überwachungsrechner nicht protokollgemäß verhält, sondern den Rechner stört. Damit ist auf jeden Fall sichergestellt, daß der in Verdacht geratene Rechner vom Netzwerk isoliert ist.

Die Erfindung wird nachstehend anhand von bevorzugten Ausführungsbeispielen unter Bezugnahme auf die beigefügte Zeichnung beschrieben.
- Fig. 1: ist eine schematische Darstellung einer Ausführungsform der Anordnung der Erfindung;
- Fig. 2: ist eine detaillierte Darstellung der Anordnung gemäß Fig. 1;
- Fig. 3: ist eine schematische Darstellung des Ablaufs der Kommunikation zwischen Prüferprogramm und Dienstprogramm;
- Fig. 4: ist ein Beispiel der Datei auf dem Überprüfungsrechner, die zu überprüfende Dateien eines Rechners und Beispielen von diesen Dateien zugeordneten Attributen enthält;
- Fig. 5: zeigt beispielhaft den Pseudo-Code für ein Dienstprogramm; und
- Fig. 6: zeigt beispielhaft den Pseudo-Code für das Prüferprogramm.

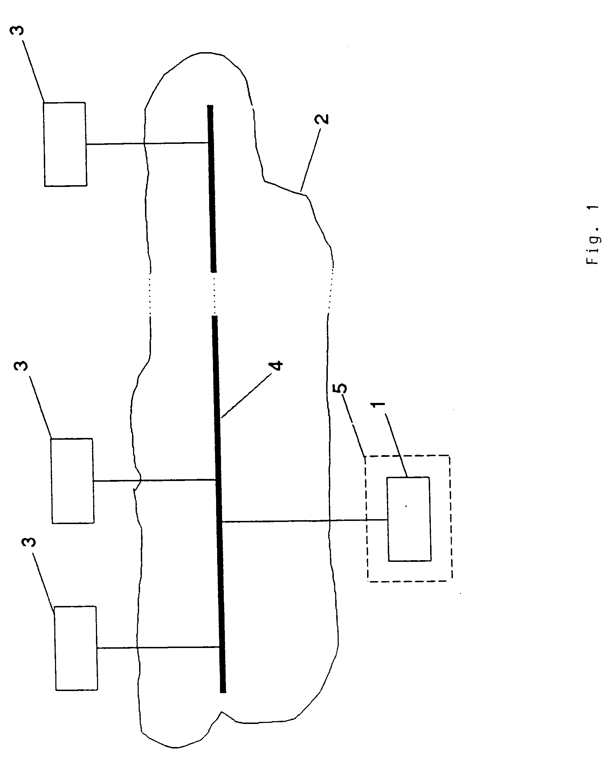

Fig. 1 zeigt schematisch die erfindungsgemäße Anordnung mit einem Überwachungsrechner 1, der über ein (lokales) Netzwerk 2 mit einem oder mehreren zu überprüfenden Rechnern 3 verbunden ist. Als lokales Netzwerk wird im Beispiel das BusSystem 4 "Ethernet" mit dem Protokoll TCP/IP verwendet; es ist jedoch auch möglich, andere Arten von Netzwerken zu verwenden und das TCP/IP-Protokoll kann auch über serielle Leitungen und Vermittlungsrechner abgewickelt werden. Der Überwachungsrechner 1 ist durch eine Abschirmung 5 physisch gesichert, so daß zu ihm kein unbefugter Zugriff möglich ist. Hierzu kann beispielsweise ein besonderer, abschließbarer Raum dienen, zu dem nur eine bekannte kleine Anzahl von Mitarbeitern Zutritt hat.

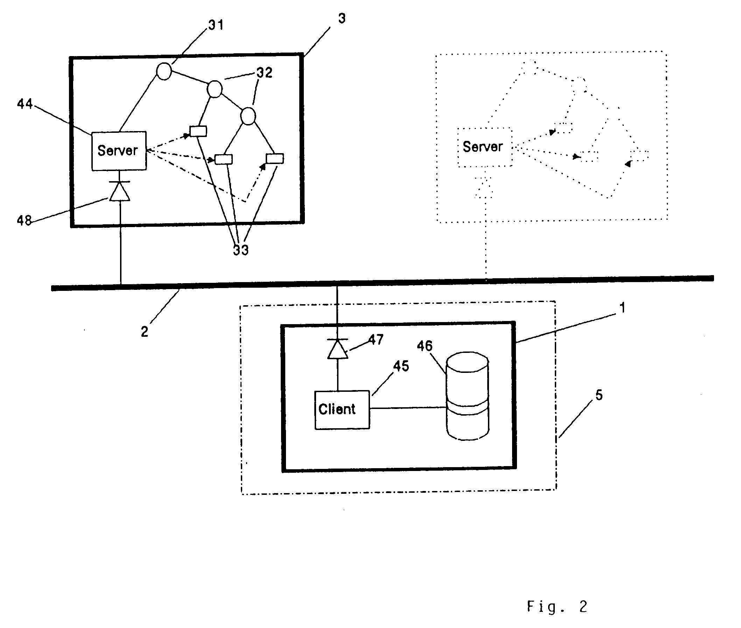

Fig. 2 zeigt eine detailliertere Darstellung dieser Anordnung, auf der per Software eine Client-Server-Architektur implementiert ist. In dem zu überprüfenden Rechner 3 ist ein Dateibaum mit einer Wurzel 31, Unterverzeichnissen 32 und Dateien 33 vorhanden. Auf diesem Rechner 3 ist auch ein Dienstprogramm (Server) 44 installiert.

In dem Überwachungsrechner 1 läuft das Prüferprogramm (Client) 45 ab, das aus einer Datei 46 die Namen und die Soll-Attribute der zu überprüfenden Dateien im Rechner erhält. Für jeden Eintrag in der Datei 46 wird ein Auftrag zur Berechnung der Attribute einer Datei an das Dienstprogramm 44 geschickt, das seinerseits die benannte Datei 33 ermittelt, deren Attribute bestimmt und als Antwort zurück zum Prüferprogramm 45 übermittelt. Diese Antwort wird von dem Prüferprogramm 45 mit den Sollwerten in der Datei 46 verglichen.

Die Diodensymbole 47 und 48 deuten die ventilartige Eigenschaft der verwendeten Client-Server-Architektur an. Dabei ist zumindest das Diodensymbol 48 redundant. Wesentlich ist, daß auf den Überwachungsrechner 1 nicht zugegriffen werden kann.

Der Überwachungsrechner 1 wird so konfiguriert, daß auf ihm keine Dienstprogramme aktiv sind oder aktiviert werden können. Der Überwachungsrechner ist insoweit vom Netzwerk isoliert.

Auf den Rechnern 3 können neben dem zur Überprüfung verwendeten Dienstprogramm 44 auch noch weitere Programme, also auch Prüferprogramme und Dienstprogramme aktiv sein. Auf dem Überwachungsrechner können noch weitere Prüferprogramme alternativ oder parallel aktiviert werden, um dem Bedienpersonal z.B. einen Dialogzugriff auf den zu testenden Rechner zu erlauben.

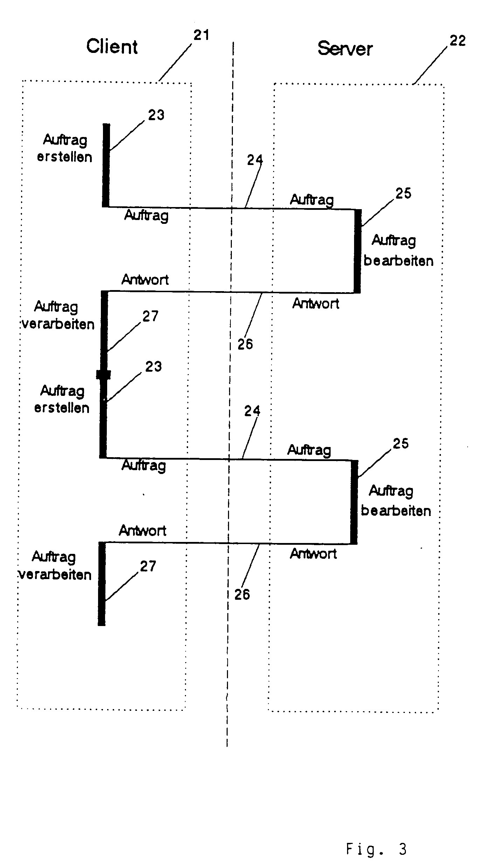

Fig. 3 zeigt schematisch den Ablauf der Kommunikation zwischen dem Prüferprogramm 45 und dem Dienstprogramm 44. Der Schritt "Auftrag erstellen" 23 findet im Prüferprogramm 45 statt. Der Schritt "Auftrag übermitteln" 24 erfolgt über das Netzwerk 2. Der Schritt "Auftrag bearbeiten" 25 findet im Dienstprogramm 44 statt, der Schritt "Auftrag rückmelden" 26 erfolgt wiederum über das Netzwerk 2 und der Schritt "Auftrag abschließend verarbeiten" 27 findet wiederum im Prüferprogramm 46 statt. Wie in Fig. 3 dargestellt, wird dieser Ablauf mehrfach wiederholt. Im vorliegenden Fall besteht ein Auftrag darin, die Attribute einer Datei auf dem zu überprüfenden Rechner 3 zu ermitteln.

Die Aufträge werden üblicherweise synchron durchgeführt, d.h. das Dienstprogramm 44 führt den Auftrag sofort aus und meldet das Resultat an das Prüferprogramm 45 zurück. Das Prüferprogramm 45 wiederum, nachdem es den Auftrag über das Netzwerk 2 geschickt hat, wartet auf das Eintreffen der Antwort vom Dienstprogramm 44. Um die Rechenkapazitätauslastung insbesondere des Überwachungsrechners 1 zu erhöhen, können die Aufträge an die verschiedenen Rechner auch zeitverschachtelt abgegeben und empfangen werden.

Bei rechenzeit-kritischen Anwendungen kann das Dienstprogramm 44 für einen Auftrag auch eine Auftragsdatei zur späteren Ausführung bilden (Batch-Job); durch die erheblich größere Zeitschranke, die üblicherweise bis zu einer Stunde andauern kann, erhöht sich die Chance für einen Eindringling jedoch erheblich, die Auftragsdateien zu manipulieren. Dies ist in der Regel einfacher, als das Dienstprogramm zu manipulieren.

Die Client-Server-Architektur ist durch Software realisiert. Bei synchroner Ausführung wird jedoch in der Regel ein Netzwerk gefordert sein, das schnelle Transportfunktionen zur Verfügung stellt. Ethernet hat den Vorteil, daß mit dem Zugang zum physikalischen Medium, dem Kabel, ein Zugang zu allen bislang angeschlossenen Rechnern möglich ist, ohne daß eine zentrale Konfigurationsverwaltung aktiviert werden muß. Für die vorgeschlagene Anordnung ist die Art des Netzwerks jedoch unerheblich. Es wird lediglich vorausgesetzt, daß das Prüferprogramm 45 auf dem Überwachungsrechner 1 das Dienstprogramm 44 auf dem zu überwachenden Rechner 3 initiieren kann und ein Resultat zurückerhält. Die Ventilwirkung zwischen Netzwerk 2 und Überwachungsrechner 1 kann auch per Hardware erzeugt werden; diese Lösung ist jedoch nicht so elegant, da sie auf einer höheren Ebene erfolgen muß. Der Überwachungsrechner 1 muß ja Antworten vom zu überwachenden Rechner 3 erhalten, so daß eine bidirektionale Kommunikation notwendig ist. Eine Ventilwirkung der Hardware müßte daher auf die Inhalte der über das Netzwerk übertragenen Datenblöcke wirken. Es ist wesentlich einfacher, die Software auf dem Überwachungsrechner 1 so zu konfigurieren, daß sie die Inhalte der ankommenden Datenpakete nur im Rahmen des Überwachungsprotokolls interpretiert und keinen allgemeinen Zugriff zuläßt.

Die vorstehend beschriebene Anordnung und das Verfahren erhöhen die Sicherheit gegen unbemerkte Manipulationen von an dem Netzwerk angeschlossenen Rechnern beträchtlich. Eine noch weitergehende Sicherheit kann dadurch erzielt werden, daß - wie bereits beschrieben - die Kommunikation zwischen Prüferprogramm 45 und Dienstprogramm 44 verschlüsselt wird, vorzugsweise mit wechselnden Schlüsseln,
- daß vor der eigentlichen Abwicklung eines Auftrages ein sicheres Authentisierungs-Protokoll, z.B. nach Beth (DE 38 17 484) abläuft,
- daß das Dienstprogramm 44 in ein anderes auf dem Rechner 3 vorliegendes, möglichst komplexes Dienstprogramm eingebunden wird oder
- daß auf dem Rechner 3 nicht das vollständige Dienstprogramm 44 vorliegt, sondern lediglich ein Ladeprogramm vorgesehen ist, welches das eigentliche Dienstprogramm 44 von dem Überwachungsrechner 1 erhält.

Diese Möglichkeiten der weiteren Erhöhung der Sicherheit gegen Rechnermanipulationen können ggfs. auch kombiniert werden.

Zu den einzelnen Möglichkeiten der Sicherheitserhöhung wird noch folgendes angemerkt.

Ein Authentisierungsverfahren ist keine Verschlüsselung eines Datenaustausches im herkömmlichen Sinne. Beim Authentisierungsverfahren ist nicht die Vertraulichkeit des Datenaustausches zu sichern, sondern die Authentizität der Nachrichten. Es muß also sichergestellt sein, daß die erwartete Antwort auch unverfälscht vom angenommenen Dienstprogramm 44 kommt.

Das Verfahren des Ladeprogrammes erlaubt es, das Dienstprogramm 44 mit einer ständig wechselnden Kennung zu versehen. Damit ist für die oben angegebenen Authentisierungsprotokolle eine besser gesicherte Schlüsselspeicherung gegeben, weil die Zeitspanne zur Extraktion des Schlüssels und zum Einbau in ein Täuschungs-Dienstprogramm geringer ist, als wenn das Dienstprogramm permanent auf dem überwachenden Rechner vorhanden ist. Ein Täuscher-Ladeprogramm ist ohne Nutzen für einen Eindringling, da dieser das übermittelte Dienstprogramm 44 zur Ausführung bringen muß, um eine authentische Rückantwort zum Überwachungsrechner 1 zu erzeugen.

Als symmetrische Verschlüsselung wird üblicherweise ein Verfahren bezeichnet, bei dem ein und derselbe Schlüssel zur Ver- und Entschlüsselung verwendet wird. Als Beispiel wird der umfassend bekannte amerikanische "Data Encryption Standard" (DES) genannt.

Eine Prüfsumme herkömmlicher Art, beispielsweise als Quersumme oder cyclischer Code (cyclische Redundanzüberprüfung, CRC), erlaubt es mit einfachen Mitteln, zu einer Datei eine zweite Datei zu konstruieren, deren Prüfsumme gleich der ersten Datei ist. Als kryptographische Prüfsumme (genauer: kryptographisch sichere Prüfsumme) wird ein Verfahren bezeichnet, das zu einer Datei eine Prüfsumme berechnet, so daß diese Berechnung effizient erfolgen kann, es jedoch praktisch unmöglich ist, eine zweite Datei zu finden, die dieselbe Prüfsumme hat. Ein Beispiel hierfür ist das Verfahren von Juenemann, beschrieben im ISO-Standard X500, Teil III.

Es ist weiterhin anzumerken, daß zur Realisierung der oben angesprochenen Client-Server-Architektur in jüngster Zeit vermehrt eine spezielle Programmiertechnik zur Realisierung der Programm-zu-Programm-Kommunikation verwendet wird, die mit "Remote Procedure Call" bezeichnet wird.

Die Arten der zur Überprüfung verwendeten Attribute der Dateibestände haben keinen Einfluß auf die Erfindung; sie sind vielmehr eine der wesentlichen Eigenschaften des zu überwachenden Rechners. Allein die kontinuierliche Überprüfung der Attribute unter Verzicht auf Prüfsummen bietet einen signifikanten Schutz gegen Manipulationen, da viele Manipulationsverfahren bekannt sind, bei denen eine Änderung der Dateiattribute bewirkt wird.

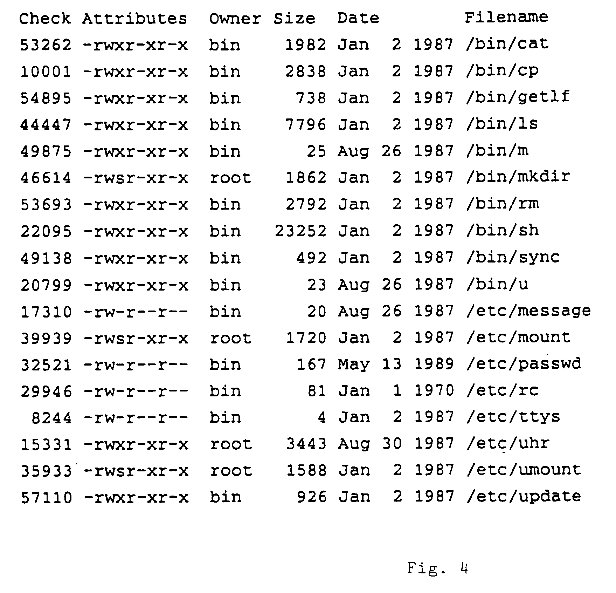

Fig. 4 zeigt ein Beispiel der Inhalte einer Datei 46, die die zu überprüfenden Dateinamen (file name) und jeweils dazugehörige Attribute wie eine Prüfsumme, Prioritätsattribute, die Zugehörigkeit, die Größe und das Datum der Datei enthält.

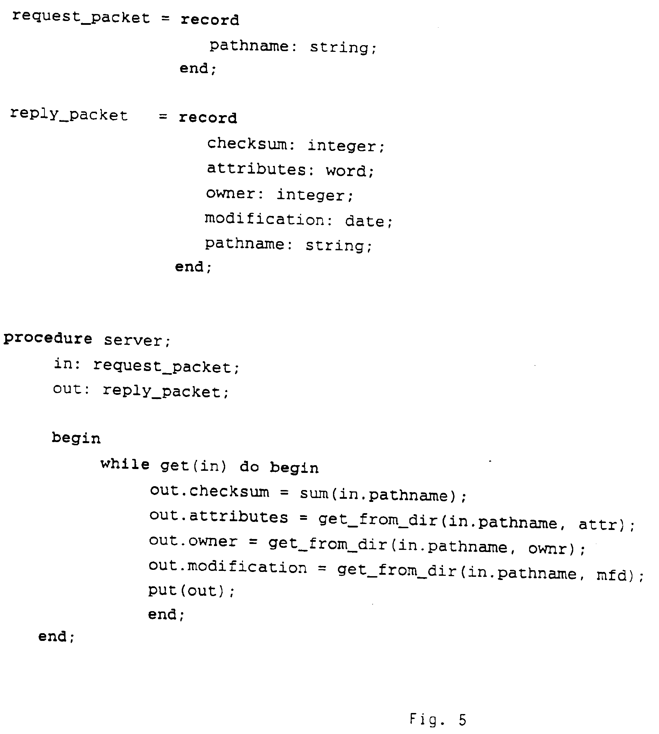

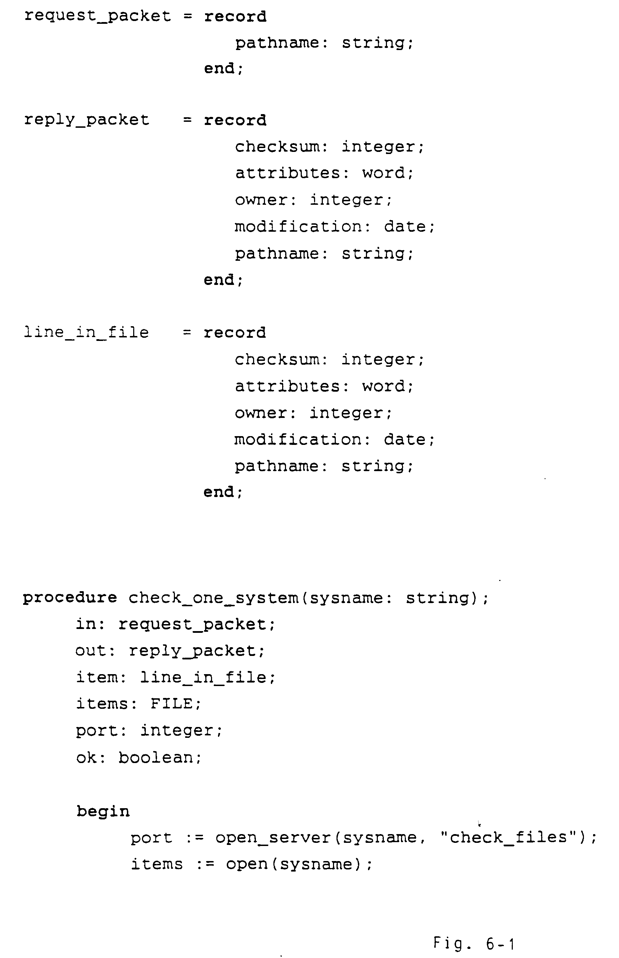

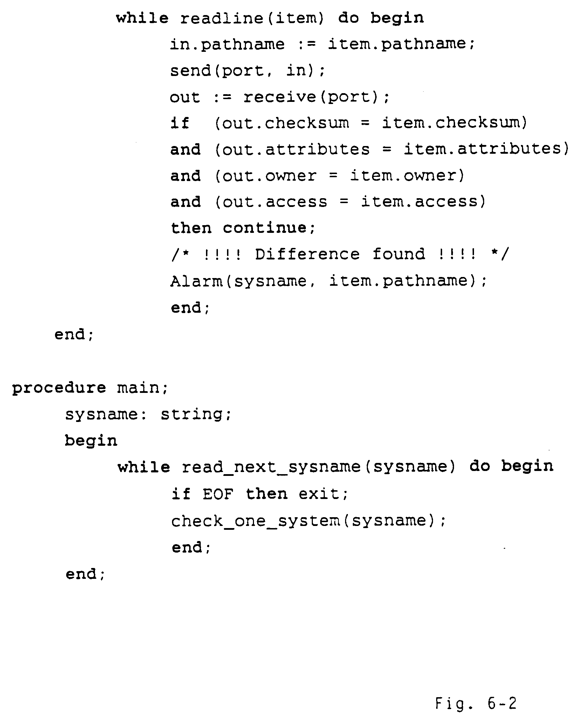

Fig. 5 zeigt ein Beispiel des Pseudocodes für ein Dienstprogramm 44, und Fig. 6 zeigt ein Beispiel für den Pseudocode eines Prüferprogramms 45.

## Patentansprüche

1. Verfahren zur Überwachung von Manipulationen an Rechnern (3), die über ein Netzwerk (2) verbunden sind, bei dem automatisch Attribute von Datenbeständen der Rechner (3) abgefragt und mit geschützt gespeicherten Sollwerten der Attribute verglichen werden und bei dem bei einer Nicht-Übereinstimmung ein Alarm ausgelöst wird, dadurch **gekennzeichnet,** daß die Abfrage, der Vergleich und die Alarmauslösung von einer räumlich für Eindringlinge nicht zugänglichen, mit den Rechnern (3) verbundenen Überwachungseinrichtung (1), insbesondere von einem Überwachungsrechner, durchgeführt werden, deren die Sollwerte enthaltenden Datenbestände nicht abfragbar sind, wobei die Abfrage vorzugsweise über das Netzwerk (2) stattfindet.

2. Verfahren nach Anspruch 1, dadurch **gekennzeichnet,** daß die Überwachungseinrichtung (1) die Datenbestandsattribute mehrerer Rechner (3) zeitverschachtelt abfragt und mit Sollwerten vergleicht.

3. Verfahren nach Anspruch 1 oder 2, dadurch **gekennzeichnet,** daß die Überwachungseinrichtung (1) das Abfragen der Datenbestandsattribute in regelmäßigen Zeitabständen durchführt.

4. Verfahren nach einem der Ansprüche 1 bis 3, dadurch **gekennzeichnet,** daß die Überwachungseinrichtung ein Überwachungsrechner (1) ist, der mindestens ein Prüfungsprogramm (45) und mindestens eine Datei (46) zur Speicherung von Namen der zu überprüfenden Datenbestände und von Sollwerten der Attribute der jeweiligen Datenbestände hat, daß die Rechner (3) jeweils mindestens ein Dienstprogramm (44) haben, das Attribute von Datenbeständen des jeweiligen Rechners (3) berechnet und über das Netzwerk (2) abgibt, daß das Abfragen eines Attributs dadurch erfolgt, daß das Prüfungsprogramm (45) einen Auftrag an das entsprechende Dienstprogramm (44) abgibt und das über das Netzwerk (2) ankommende Attribut mit dem gespeicherten Sollwert des Attributs vergleicht, und daß die Datenbestände des Überwachungsrechners (1), der kein Dienstprogramm hat, nicht abfragbar sind.

5. Verfahren nach Anspruch 4, dadurch **gekennzeichnet,** daß die Kommunikation zwischen Prüferprogramm (45) und Dienstprogramm (44), vorzugsweise mit wechselnden und gemäß dem Diffie-Hellmann-Verfahren erzeugten Schlüsseln verschlüsselt wird.

6. Verfahren nach Anspruch 4, dadurch **gekennzeichnet,** daß vor der Abfrage der Datenbestandsattribute ein Authentisierungsverfahren abläuft, welches sicher-stellt, daß die abgefragten Attribute von den Dienstprogrammen (44) stammen.

7. Verfahren nach Anspruch 3, dadurch **gekennzeichnet,** daß in den Rechnern jeweils anstelle eines Dienstprogrammes (44) nur ein Ladeprogramm gespeichert ist, das das Dienstprogramm (44) laden kann, und daß das Dienstprogramm (44) im Überwachungsrechner (1) gespeichert ist und vor der Abfrage der Dateibestandsattribute über das Netzwerk an das Ladeprogramm im jeweiligen Rechner (3) gesendet wird

8. Verfahren nach Anspruch 7, dadurch **gekennzeichnet**, daß das in dem Überwachungsrechner (1) vorliegende Dienstprogramm (44) vor dem Absenden an den Rechner (3) mit einer gewöhnlichen oder kryptographischen Prüfsumme beaufschlagt wird, und daß das Ladeprogramm diese Prüfsumme extrahiert und an den Überwachungsrechner (1) zur Überprüfung zurücksendet.

9. Verfahren nach einem Ansprüche 1 bis 8, dadurch **ge****kennzeichnet,** daß beim Auslösen eines Alarms eine Nachricht an den Systemverwalter abgegeben und/oder der betreffende Rechner (3) vom Netzwerk (2) getrennt wird.

10. Anordnung zur Überwachung von Manipulationen an Rechnern (3), die über ein Netzwerk (2) verbunden sind mit einer Abfragevorrichtung zum automatischen Abfragen von Datenbeständen der Rechner (3), mit einer Vorrichtung zum Vergleichen der Attribute mit geschützt gespeicherten Sollwerten, und mit einer Alarmauslösevorrichtung, die bei Nicht-Übereinstimmung einer Alarm auslöst, dadurch **gekennzeichnet,** daß eine räumlich für Eindringlinge nicht zugängliche zentrale Überwachungseinrichtung (1) vorgesehen ist, die mit den Rechnern (3) verbunden und so eingerichtet ist, daß sie auf die Rechner (3) zugreifen kann, diese aber nicht auf sie zugreifen können, wobei die Überwachungseinrichtung vorzugsweise ein mit den Rechnern (3) über das Netzwerk (2) verbundener Überwachungsrechner (1) ist und die Abfragevorrichtung, die Vergleichsvorrichtung und die Alarmauslösevorrichtung enthält.

## Claims

1. Method of monitoring manipulations on computers (3) which are connected via a network (2), in which attributes of databases of the computers (3) are automatically inquired and compared with protectedly stored reference values of the attributes and in which, in the event of non-correspondence, an alarm is triggered, characterized in that the inquiry, the comparison and the alarm triggering are carried out by a monitoring device (1), in particular by a monitoring computer, which is physically not accessible to intruders, is connected to the computers (3) and the databases of which, containing the reference values, cannot be interrogated, the inquiry preferably taking place via the network (2).

2. Method according to Claim 1, characterized in that the monitoring device (1) inquires the database attributes of a plurality of computers (3) in a time-interleaved manner and compares them with reference values.

3. Method according to Claim 1 or 2, characterized in that the monitoring device (1) carries out the inquiring of the database attributes at regular time intervals.

4. Method according to one of Claims 1 to 3, characterized in that the monitoring device is a monitoring computer (1), which has at least one testing program (45) and at least one file (46) for the storing of names of the databases to be checked and of reference values of the attributes of the respective databases, in that the computers (3) have in each case at least one service program (44), which calculates attributes of databases of the respective computer (3) and outputs them via the network (2), in that the inquiring of an attribute is performed by the testing program (45) issuing a job to the corresponding service program (44) and comparing the attribute arriving via the network (2) with the stored reference value of the attribute, and in that the databases of the monitoring computer (1), which has no service program, cannot be interrogated.

5. Method according to Claim 4, characterized in that the communication between tester program (45) and service program (44) is encoded, preferably with changing codes produced according to the Diffie-Hellmann method.

6. Method according to Claim 4, characterized in that, before the inquiring of the database attributes, an authentication method runs, which ensures that the inquired attributes originate from the service programs (44).

7. Method according to Claim 3, characterized in that, instead of a service program (44), in the computers there is stored in each case only a loading program, which can load the service program (44), and in that the service program (44) is stored in the monitoring computer (1) and, before the inquiry of the database attributes, is sent via the network to the loading program in the respective computer (3).

8. Method according to Claim 7, characterized in that the service program (44) in the monitoring computer (1) is subjected to a customary or cryptographic checksum before sending to the computer (3), and in that the loading program extracts this checksum and sends it back to the monitoring computer (1) for checking.

9. Method according to one of Claims 1 to 8, characterized in that, upon triggering an alarm, a message is issued to the system administrator and/or the computer (3) concerned is separated from the network (2).

10. Arrangement for monitoring manipulations on computers (3) which are connected via a network (2), having an inquiring means for the automatic inquiry of databases of the computers (3), having a means for comparing the attributes with protectedly stored reference values, and having an alarm-triggering means which triggers an alarm in the event of non-correspondence, characterized in that a central monitoring device (1) is provided, which is physically not accessible to intruders, is connected to the computers (3) and is set up in such a way that it can access the computers (3) but the latter cannot access it, the monitoring device preferably being a monitoring computer (1) connected to the computers (3) via the network (2) and containing the inquiring means, the comparing means and the alarm-triggering means.

## Revendications

1. Procédé pour contrôler des manipulations dans des ordinateurs (3), qui sont reliés par l'intermédiaire d'un réseau (2), selon lequel des attributs de fichiers de données des ordinateurs (3) sont interrogés automatiquement et sont comparés à des valeurs de consigne des attributs, mémorisées avec une protection, et selon lequel une alarme est déclenchée en cas de non-coïncidence, caractérisé par le fait que l'interrogation, la comparaison et le déclenchement de l'alarme sont exécutés par un dispositif de contrôle (1) qui n'est pas accessible physiquement à des intrus et qui est relié aux ordinateurs (3), notamment un ordinateur de surveillance, dont les fichiers de données, qui contient des valeurs de consigne, ne peuvent pas être interrogés, l'interrogation étant exécutée de préférence par l'intermédiaire du réseau (2).

2. Procédé suivant la revendication 1, caractérisé par le fait que le dispositif de contrôle (1) interroge d'une manière imbriquée dans le temps les attributs de fichiers de données de plusieurs ordinateurs (3) et les compare à des valeurs de consigne.

3. Procédé suivant la revendication 1 ou 2, caractérisé par le fait que le dispositif de contrôle (1) exécute l'interrogation des attributs pendant des intervalles de temps réguliers.

4. Procédé suivant la revendication 1 à 3, caractérisé par le fait que le dispositif de contrôle est un ordinateur de contrôle (1), qui possède au moins un programme de contrôle (45) et au moins un fichier (46) servant à mémoriser les noms des fichiers de données à contrôler, et des valeurs de consigne des attributs, des fichiers de données respectifs, que les ordinateurs (3) possèdent chacun au moins un programme de service (44) qui calcule des attributs de fichiers de données de l'ordinateur respectif (3) et les délivre par l'intermédiaire du réseau (2), que l'interrogation d'un attribut s'effectue grâce au fait que le programme de contrôle (45) délivre une demande au programme de service correspondant (44) et compare l'attribut, qui arrive par l'intermédiaire du réseau (2), à la valeur de consigne mémorisée de cet attribut, et que les fichiers de données de l'ordinateur de contrôle (1), qui ne possèdent aucun programme de service, ne peuvent pas être interrogés.

5. Procédé suivant la revendication 4, caractérisé par le fait que la communication entre le programme de contrôle (45) et le programme de service (44) est codée de préférence avec des codes alternants, produits conformément au procédé de Diffie-Hellmann.

6. Procédé suivant la revendication 4, caractérisé par le fait qu'avant l'interrogation des attributs de fichiers de données est exécutée une procédure d'authentification qui garantit que les attributs interrogés proviennent des programmes de service (44).

7. Procédé suivant la revendication 3, caractérisé par le fait que dans les ordinateurs est mémorisé, respectivement à la place d'un programme de service (44), seul un programme de chargement qui peut charger le programme de service (44), et que le programme de service (44) est mémorisé dans l'ordinateur de contrôle (1) et est envoyé, par l'intermédiaire du réseau et avant l'interrogation des attributs de fichiers de données, au programme de chargement dans l'ordinateur respectif (3).

8. Procédé suivant la revendication 7, caractérisé par le fait que le programme de service (44) qui est présent dans l'ordinateur de contrôle (1), est chargé, avant son envoi à l'ordinateur (3), par une somme de contrôle usuelle ou cryptographique et que le programme de chargement extrait cette somme de contrôle et la renvoie, à des fins de contrôle, à l'ordinateur de contrôle (1).

9. Procédé suivant l'une des revendications 1 à 8, caractérisé par le fait que, lors du déclenchement d'une alarme, une information est envoyée au dispositif de gestion du système et/ou l'ordinateur considéré (3) est déconnecté du réseau (2).

10. Dispositif pour contrôler des manipulations dans des ordinateurs (3) qui sont reliés par l'intermédiaire d'un réseau (2), et comportant un dispositif d'interrogation servant à réaliser l'interrogation automatique de fichiers de données des ordinateurs (3), un dispositif pour comparer les attributs à des valeurs de consigne mémorisées d'une manière protégée, et un dispositif de déclenchement d'alarme qui déclenche une alarme, en tant que non coïncidence, caractérisé par le fait qu'il est prévu un dispositif central de contrôle (1), non accessible physiquement à des intrus et qui est relié aux ordinateurs (3) et est agencé de telle sorte qu'il peut accéder aux ordinateurs (3), mais que ces derniers ne peuvent pas accéder à ce dispositif de contrôle, le dispositif de contrôle étant de préférence un ordinateur de contrôle (1) relié aux ordinateurs (3) par l'intermédiaire du réseau (2) et contient le dispositif d'interrogation, le dispositif de comparaison et le dispositif de déclenchement d'alarme.
